# EUROPÄISCHE PATENTSCHRIFT

(11) **EP 3 083 322 B1**
(45) Veröffentlichungstag und Bekanntmachung des Hinweises auf die Patenterteilung: **24.04.2019**
(21) Anmeldenummer: 15784682.5
(22) Anmeldetag: 23.10.2015
(51) Int. Cl.: B60L 5/08, B60L 5/40, B60L 5/16

(54) **STROMABNEHMER UND SCHLEIFLEITUNGSSYSTEM**
CURRENT COLLECTOR AND CONDUCTOR LINE SYSTEM
COLLECTEUR DE COURANT ET SYSTÈME DE LIGNE DE CONTACT

(30) Priorität: 10.02.2015 DE 102015101849
(43) Veröffentlichungstag der Anmeldung: 26.10.2016
(73) Patentinhaber: Conductix-Wampfler GmbH, 79576 Weil am Rhein-Märkt (DE)
(72) Erfinder: LANG, Dietmar, 79418 Schliengen (DE)
(74) Vertreter: Charrier Rapp & Liebau
(86) Internationale Anmeldenummer: PCT/EP2015/074567
(87) Internationale Veröffentlichungsnummer: WO 2016/128076

(56) Entgegenhaltungen:
- EP-A1- 0 453 721
- DE-A1- 19 540 914
- FR-A1- 2 320 204

## Beschreibung

Die Erfindung betrifft einen Stromabnehmer für eine Schleifleitung nach dem Oberbegriff des Anspruchs 1 sowie ein Schleifleitungssystem nach dem Oberbegriff des Anspruchs 15.

Bei bekannten Schleifleitungssystemen fährt ein verfahrbarer elektrischer Verbraucher längs einer Schleifleitung. Die Versorgung des Verbrauchers mit elektrischer Energie erfolgt dabei über einen Stromabnehmer, dessen Schleifkontakte in Leiterstränge der Schleifleitung eingreifen. Der Verbraucher kann z.B. ein Transportgehänge einer Schienenhängebahn, ein auf Schienen verfahrbarer Leitungswagen oder auch sog. E-RTG-Containerkräne sein, welche mit einem elektrischen Fahrantrieb ausgerüstet sind, der von der Schleifleitung mit elektrischer Energie versorgt wird.

Die US 3,396,246 A offenbart einen Stromabnehmer für längs eines Fahrdrahts verfahrbaren elektrischen Verbraucher mit zwei hintereinander angeordneten, jeweils an einem eigenen Hebelarm angeordneten Schleifstücken. Die beiden Arme sind jeweils um eine gemeinsame Drehachse drehbar an einer Gabellagerung angeordnet und werden durch zwei Spiralfedern aufeinander zugezogen. Die Enden der Spiralfedern sind dabei jeweils durch Löcher in den Armen geführt. Diese getrennte Anordnung der beiden Arme ist aufwendig und erfordert die Montage von zwei eigenen Spiralfedern.

Die US 1,826,854 A offenbart einen Stromabnehmer für längs eines Fahrdrahts verfahrbaren elektrischen Verbraucher, der mittels zweier hintereinander angeordneter Laufrollen Strom von dem Fahrdraht abgreifen kann. Dabei werden die Stromabnehmerrollen über kurze Zuleitungen mit Schleifkontakten einer Schleifringanordnung verbunden. Die gegenüber den Schleifkontakten feststehenden Kontaktflächen der Schleifringanordnung sind an einem Arm angeordnet, welche seinerseits über an einer Basis angeordnet ist. Von den feststehenden Kontaktflächen der Schleifringanordnung gehen Zuleitungen zu einer zweiten, an der Basis angeordneten Schleifringanordnung. Diese Konstruktion ist aufgrund der zwei Schleifringanordnungen aufwendig und zumindest im Bereich der nach außen nicht abgeschirmten ersten Schleifringanordnung berührungsgefährdet.

Die EP 0 226 497 B1 offenbart einen Stromabnehmerkopf für einen Oberleitungsbus, bei dem die Leitungen zwischen einem in einem großen Winkel drehbaren Schleifkontakt und einer Anschlussklemme zum Teil in einem drehbaren Arm des Stromabnehmers geführt sind, und zum Teil frei liegend in offenen Bereichen verlaufen. In den offenen Bereichen besteht die Gefahr, dass die Leitungen von außen beschädigt werden oder hängen bleiben. Weiter sind die Leitungen zwischen Schleifkontakt und Anschlussklemme nicht definiert geführt oder fixiert, so dass sie aufgrund ihrer momentanen Lage die Bewegungen des Arms und des Schleifkontakts behindern. Zudem werden die Leitungen hierdurch ständig hin und her bewegt, so dass die elektrisch leitenden Leitungsadern beschädigt und die Isolierungen abgescheuert werden können. So besteht auch eine Verletzungsgefahr für Personen, wenn die Leitungsadern stellenweise blank liegen.

Zudem wird dort die Bewegung des Schleifkontakts lediglich durch die beiden Endanschläge begrenzt. Eine automatische Rückstellung in eine bevorzugte Ruhestellung mit guter Anlage an den Leiterstrang der Schleifleitung wird allenfalls durch die willkürlich durch den Stromabnehmerkopf geführten Leitungen bereitgestellt.

Die DE 30 18 428 A1 offenbart einen Steuerstromübertrager mit einer federnd an eine Steuerstromschiene anliegenden Kontaktgeberanordnung für Fahrwerke in Fördersystemen. Auch dort werden die Steuerstromleitungen lediglich zum Teil geschützt und weitgehend frei beweglich durch ein längliches Gehäuse geführt. Auch hier besteht die Gefahr, dass die Steuerstromleitungen oder ihre Isolierung durch ständige Bewegungen des Steuerstromübertragers und der Kontaktgeberanordnung beschädigt werden.

Bei der JP S63-202202 A wird bei einem Stromabnehmer für Schleifleitungen die Verbindungsleitung zu den Schleifstücken ebenfalls weitgehend frei geführt und nur an einer Stelle des Stromabnehmers mit einer Schelle aus einem Blechstück befestigt. Gerade im Bereich der Schelle besteht dabei die Gefahr, dass das scharfe Blech die Isolierung der Leitung beschädigt. Auch sonst besteht dort die Gefahr, dass die Leitung verhakt oder abreist.

Auch bei der EP 1 352 777 A1 verläuft bei einem Stromabnehmer für Schleifleitungen die Leitung vom Schleifkontakt weg freiliegend, so dass auch hier erhöhte Beschädigungsgefahr besteht.

Die DE 36 10 455 A1 offenbart einen Stromabnehmerkopf mit zwei an einer drehbar gelagerten Wippe angeordneten Schleifstücken. Ein Kippbereich der Wippe wird durch Anschläge am Lager der Wippe begrenzt. Zwischen den Anschlägen kann die Wippe jedoch frei hin und her bewegt werden, so dass keine optimale Anlage an dem Leiterstrang der Schleifleitung sichergestellt ist. Auch verläuft dort die Verbindungsleitung von den Schleifstücken weg weitgehend frei und ungeschützt.

Die FR 2 320 204 A1 offenbart eine Schleifleitungsanordnung für den Fahrdraht eines Busses o.ä., wobei dort zwei Schleifstücke an einer Wippe angeordneten sind, die um eine quer zu ihrer Längsrichtung verlaufende horizontale Drehachse an einem Kipparm drehbar ist. Der Dreharm wiederum ist um eine vertikale Drehachse drehbar am Kipparm angeordnet. Um eine Nulllage in Querrichtung zur Fahrrichtung beizubehalten, ist eine Führungskulisse in einer Führungsbuchse in Drehrichtung um die Drehachse beweglich geführt, wobei die Führungsbuchse durch zwei Spiralfedern zwischen den seitlichen Schenkeln des Kipparms zentriert wird. Hierbei wird aber die Wippe von oben gesehen stets auf die Längsachse des Kipparms hin zentriert, und dabei um die vertikale Drehachse gedreht, nicht aber um die horizontale Drehachse der Wippe. Eine Möglichkeit, die gesamt Wippe mit den zwei Schleifstücken gleichmäßig an die Schleifleitung zu halten, ist dort nicht gegeben.

Die EP 0 453 721 A1 offenbart einen Stromabnehmer für Schleifleitungen mit einem Basisteil auf, an dem ein Arm angelenkt ist, der einen U-förmigen Schleifkontaktträger mit an seinen Schenklenden in Haltern angeordneten Schleifkontakten trägt. Dabei können die Halter gegenüber dem U-förmigen Schleifkontaktträger dadurch in eine Neutrallage gebracht werden können, dass jeweils ein federnder Lappen an jedem Halter vorgesehen ist, der zwischen zwei Stiften an jeweils äußeren Enden des Schleifkontaktträgers gehalten wird. Nachteilig ist dabei die aufwendige Konstruktion, wobei lediglich die beiden Halter in Neutrallage gebracht werden können, während der U-förmigen Schleifkontaktträger hierdurch nicht in eine gewünschte Lage gebracht werden kann, in der die beiden Schleifstücke gleichmäßig an die Schleifleitung angedrückt werden können.

Die DE 195 40 914 A1 offenbart einen Stromabnehmer für die Energieübertragung zwischen einem Fahrdraht und einem Triebwagen, wobei ein der Stromabnehmer mindestens ein Schleifstück und einen Tragarm zum Anheben des Schleifstücks und zum Aufbringen einer Kontaktkraft, mit der das Schleifstück bei der Energieübertragung von unten an dem Fahrdraht anliegt, aufweist. Der Tragarm ist um eine horizontale Achse schwenkbar an dem Triebwagen gelagert und mit einer Hubeinrichtung um die Achse mittels eines schnellen Aktuators aufrichtbar. Dabei wird der Aktuator mittels einer Steuerung in Abhängigkeit von dem Signal mindestens eines an dem Stromabnehmer angeordneten Kraft- oder Beschleunigungssensors angesteuert, um die Kontaktkraft des Schleifstücks an den Fahrdraht konstant zu halten. Dies ist messtechnisch aufwendig und erfordert einen kostspieligen schnellen Aktuator.

Aufgabe der Erfindung ist es deshalb, einen Stromabnehmer sowie ein Schleifleitungssystem bereitzustellen, welche die oben genannten Nachteile überwinden und eine sichere Führung des Stromabnehmerkontakts in dem Leiterstrang der Schleifleitung sowie eine zuverlässige Energieübertragung ermöglichen.

Die Erfindung löst die Aufgabe durch einen Stromabnehmer mit den Merkmalen des Anspruchs 1 sowie ein Schleifleitungssystem mit den Merkmalen des Anspruchs 15. Vorteilhafte Weiterbildungen und Ausgestaltungen der Erfindung sind in den Unteransprüchen angegeben.

Der eingangs genannte Stromabnehmer ist erfindungsgemäß dadurch gekennzeichnet, dass an der Wippe ein erster Federarm angeordnet ist, der auf einer dem Kipparm zugeordneten ersten Gleitfläche gleitet, oder der erste Federarm dem Kipparm zugeordnet und die erste Gleitfläche an der Wippe angeordnet ist, wobei der erste Federarm bei Auslenkung der Wippe aus einer Ruhestellung gespannt wird und die Wippe zur Ruhestellung hin drückt. Hierdurch kann sichergestellt werden, dass die beiden Schleifstücke der Wippe stets optimal und gleichmäßig an den Leiterstrang angedrückt werden. Ein Abheben der Schleifstücke, welches zu einer schlechteren Energieübertragung und ggf. auch zu unerwünschten Überschlägen zwischen Leiterstrang und Schleifstücken führt, kann somit weitgehend vermieden werden. Auch kann eine gleichmäßige Abnutzung der Schleifstücke erreicht werden, so dass Wartungsintervalle für den Austausch der Schleifstücke vergrößert und dadurch bedingte Stillstände der Anlage verringert werden können.

In einer vorteilhaften Ausführung kann an der Wippe ein zweiter Federarm angeordnet sein, der auf einer dem Kipparm zugeordneten zweiten Gleitfläche gleitet, wobei der erste Federarm bei Auslenkung der Wippe aus der Ruhestellung in eine Drehrichtung um die Drehachse gespannt wird und die Wippe entgegen der Drehrichtung zur Ruhestellung hin drückt, und der zweite Federarm bei Auslenkung der Wippe aus der Ruhestellung in die andere Drehrichtung gespannt wird und die Wippe entgegen der anderen Drehrichtung zur Ruhestellung hin drückt. Alternativ kann auch der zweite Federarm dem Kipparm zugeordnet und die zweite Gleitfläche an der Wippe angeordnet sein, also die Anordnung von Federarm und Gleitfläche vertauscht werden.

Bevorzugt können dabei die an der Wippe angeordneten Federarme auf einander in Fahrrichtung gegenüberliegenden Seiten der Drehachse angeordnet und aufeinander zu gerichtet sein. Die Federarme weisen als in Richtung der Drehachse oder einer durch diese reichende Symmetrieachse. Entsprechend können in einer alternativen Ausgestaltung die an dem Kipparm angeordneten Federarme von der Drehachse weg in entgegengesetzte Richtungen zeigen. Weiter können in einer vorteilhaften Fortbildung die Federarme und/oder die Gleitflächen symmetrisch zu einer senkrecht auf der Fahrrichtung stehenden und durch die Drehachse verlaufenden Symmetrieachse ausgebildet sein.

Bevorzugt können der oder die Federarme mit ihrem freien Ende auf der oder den Gleitflächen gleiten. Hierbei können der oder die Federarme an ihrem freien Ende verdickte Gleitkontakte aufweisen, um die Gleitfähigkeit zu verbessern.

In einer konstruktiv günstigen Ausführung können die Federarme und/oder die Gleitflächen an einem Lagerblock des Kipparms angeordnet sein, welcher bevorzugt um eine senkrecht auf der Drehachse der Wippe und der Fahrrichtung stehenden weiteren Drehachse drehbar am Kipparm angeordnet ist. Dabei kann der Lagerblock vorteilhaft ein hohles, bevorzugt hohlzylindrisches Anschlussstück aufweisen, welches in eine entsprechende hohle, bevorzugt hohlzylindrische Öffnung des Kipparms eingesteckt ist. Zum Halten des Lagerblocks am Kipparm kann eine Rast- und/oder Schnappverbindung zwischen Anschlussstück und Öffnung des Kipparms vorgesehen werden.

Bevorzugt kann der Kipparm um eine weitere senkrecht zur Fahrrichtung und parallel zur Drehachse der Wippe verlaufenden Drehachse drehbar an einer Basis angeordnet sein, wobei vorteilhaft der Kipparm durch eine Feder von der Basis weg und zu dem Leiterstrang hin gedrückt werden kann. Hierdurch können die Wippe und die Schleifstücke sicher an den Leiterstrang gedrückt werden. Der Kipparm kann zusätzlich noch um eine weitere, senkrecht auf der Fahrrichtung und senkrecht auf der Drehachse der Wippe stehende Drehachse, also eine senkrecht auf einer durch die Leiterstränge definierten Ebene, stehen. Hierdurch kann die Wippe seitliche Abweichungen von der Fahrrichtung ausgleichen.

In einer montagetechnisch günstigen Ausgestaltung kann die Basis mittels einer oder mehrerer Schnappverbindungen an einer Tragplatte anklippsbar sein. Hierdurch kann ein schneller und einfacher Austausch des Stromabnehmers erfolgen, beispielsweise bei einem defekt des Stromabnehmers oder abgenutzten Schleifstücken. Vorteilhaft kann auch eine Anschlussklemme für das schleifstückferne Ende einer Anschlussleitung für die Schleifstücke lösbar mit der Basis verbunden sein, bevorzugt mittels einer schwalbenschwanzähnlich ausgebildeten Steckverbindung zwischen Anschlussklemme und Basis

Vorteilhaft können die Basis als auch der Kipparm, der Lagerblock, das hohlzylindrische Anschlussstück und/oder die Wippe aus Kunststoff, insbesondere einem harten Kunststoff wie z.B. Hartplastik hergestellt. Bevorzugt können die Federarme aus dem gleichen Material wie die Wippe bzw. der Lagerblock hergestellt sein, und besonders bevorzugt einstückig mit der Wippe bzw. dem Lagerblock.

Dabei kann der der oder die Federarme an einem Verbindungsschenkel der Wippe vorgesehen sein, insbesondere an bezüglich der senkecht zur Fahrrichtung verlaufenden Drehachse gegenüberliegenden Seiten der Wippe.

Bevorzugt kann zumindest die erste Gleitfläche so ausgebildet sein, dass der erste Federarm beim Bewegen aus der Ruhestellung stärker gespannt ist als in der Ruhestellung. Hierbei kann der erste Federarm in der Ruhestellung die Gleitfläche berühren, wobei ein sich daran anschließender Bereich der Gleitfläche so ausgebildet ist, dass der erste Federarm beim Bewegen aus der Ruhestellung in eine Richtung stärker gespannt ist als in der Ruhestellung. Vorteilhaft kann dabei ein sich an den Bereich der Gleitfläche anschließender weiterer Bereich der Gleitfläche, der sich bezüglich der Stelle, an der der erste Federarm die Gleitfläche berührt, auf der entgegengesetzten Seite wie der Bereich der Gleitfläche liegt, so ausgebildet sein, dass der erste Federarm beim Bewegen aus der Ruhestellung in die entgegengesetzte Richtung stärker gespannt ist als in der Ruhestellung. Hierdurch kann bei der Bewegung der Wippe in beiden Richtungen selbst mittels nur eines Federarms eine Rückstellung der Wippe in die Ruhestellung erreicht werden. Alternativ kann der sich an den Bereich der Gleitfläche anschließende weitere Bereich so ausgebildet sein, dass der erste Federarm beim Bewegen aus der Ruhestellung in die entgegengesetzte Richtung schwächer gespannt ist als in der Ruhestellung.

Durch ein mit einem solchen Stromabnehmer ausgerüstetes Schleifleitungssystem können diese Vorteile gut ausgenutzt werden. Dabei kann vorteilhaft der verfahrbare elektrische Verbraucher mehrere nebeneinander angeordnete Stromabnehmer zur Kontaktierung mit entsprechend nebeneinander angeordneten Leitersträngen der Schleifleitung aufweisen.

Die Erfindung wird nachfolgend anhand von detaillierten Ausführungsbeispielen mit Bezug auf die begleitenden Zeichnungen beschrieben. Diese zeigen:
- **Fig. 1**: eine schematische, dreidimensionale Ansicht eines Abschnitts eines erfindungsgemäßen Schleifleitungssystems;
- **Fig. 2**: eine schematische, dreidimensionale Ansicht eines erfindungsgemäßen Stromabnehmer des Schleifleitungssystems aus Fig. 1;
- **Fig. 3**: eine Schnittansicht durch Stromabnehmer aus Fig. 2;
- **Fig. 4**: eine seitliche Draufsicht auf den Stromabnehmer gemäß Fig. 2;
- **Fig. 5**: eine seitliche Schnittansicht auf den Stromabnehmer gemäß Fig. 3;
- **Fig. 5a**: schematische Detailansichten des Rückstellmechanismus aus Fig. 5;
- **Fig. 6-9**: Explosionsdarstellungen des Stromabnehmers aus Fig. 3.

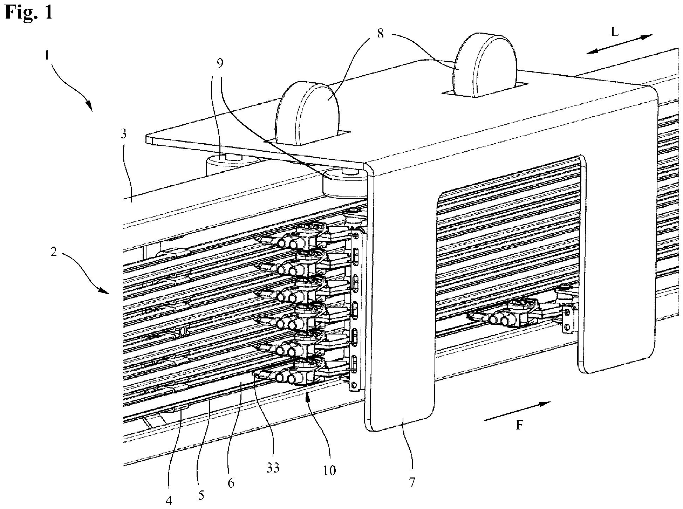

Das in Fig. 1 ausschnittsweise dargestellte Schleifleitungssystem 1 weist eine längliche Schleifleitung 2 und einen im Querschnitt doppel-T-förmigen Schienenstrang 3 auf. Am Schienenstrang 3 ist eine Leiterstranghalterung 4 für angeordnet. Weitere entlang des Schienenstrangs 3 angeordnete Leiterstranghalterungen sind zeichnerisch nicht dargestellt.

Die Leiterstranghalterung 4 hält insgesamt sechs längs der Schleifleitung 2 in eine Längsrichtung L verlaufende längliche Isolierprofile, die nachfolgend anhand von Isolierprofil 5 beschrieben werden. Die Angaben hierzu gelten entsprechend auch für die weiteren Isolierprofile.

In das im wesentlichen U-förmige elektrisch nicht leitende Isolierprofil 5 ist ein elektrisch leitender Leiterstrang 6 eingesetzt, der im Wesentlichen C- oder U-förmigen Querschnitt aufweist. Die offene Seite des U-förmigen Querschnitts von Isolierprofil 5 und Leiterstrang 6 zeigen in Fig. 1 zum Betrachter hin. Üblicherweise ist einer der in den Isolierprofilen eingesetzten Leiterstränge ein Erd- und/oder Schutzleiter. Die anderen Leiterstränge sind strom- bzw. spannungsführende Phasenleiterstränge und dienen zur Versorgung von durch ein Transportgehänge 7 angedeuteten verfahrbaren elektrischen Verbrauchern mit elektrischer Energie.

Das in eine Fahrrichtung F, welche in Längsrichtung L verläuft, verfahrbare Transportgehänge 7 weist einen in Fig. 1 nicht dargestellten elektrischen Antriebsmotor für Antriebsräder 8 auf. Die Antriebsräder 8 laufen auf dem waagrechten oberen T-förmigen Bereich des Schienenstrangs 3. Seitlich wird das Transportgehänge 7 durch Seitenführungsräder 9 geführt.

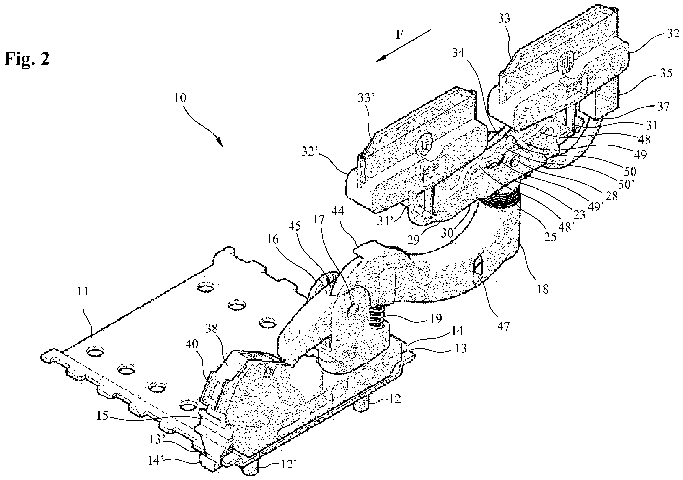

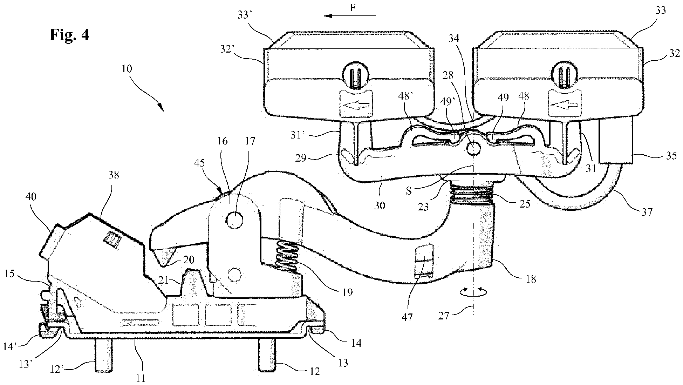

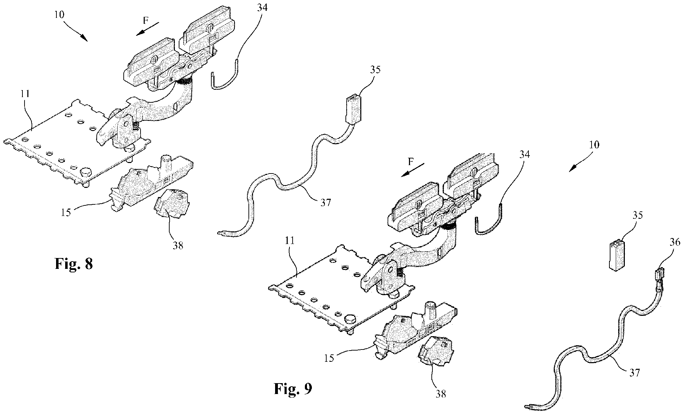

Zur Versorgung der elektrischen Verbraucher des Transportgehänges 7, beispielsweise des Antriebsmotors, und auch zur Verbindung der elektrischen Verbraucher mit dem Erd- und/oder Schutzleiterstrang ist für jeden Leiterstrang mindestens ein Stromabnehmer vorgesehen, welcher exemplarisch anhand eines in den Fig. 2 bis 9 detailliert dargestellten Stromabnehmers 10 erläutert wird. Entsprechende Angaben gelten auch für die anderen Stromabnehmer.

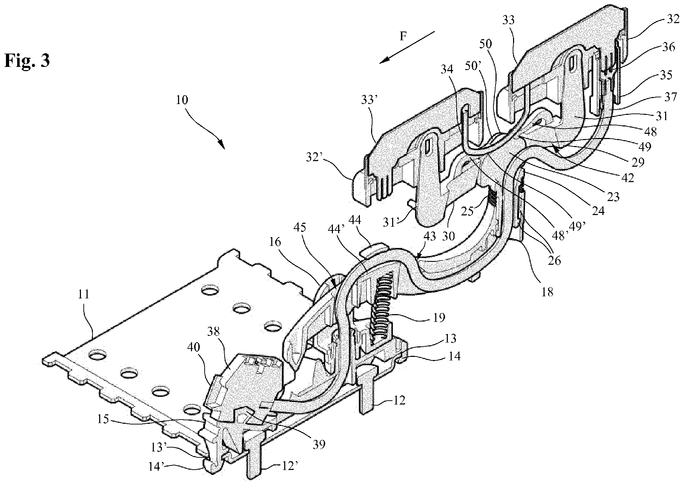

Um den Stromabnehmer 10 an dem Transportgehänge 7 zu befestigen, ist eine Tragplatte 11 vorgesehen. Diese wird mittels Verbindungsschrauben 12, 12' fest an der Innenseite des nach unten auskragenden Schenkel des Transportgehänges 7 angeschlagen. An einander gegenüberliegenden, treppenförmig gebogenen Seitenkanten der Tragplatte 11 sind mehrere Rücksprünge 13, 13' paarweise einander gegenüberliegend angeordnet. In diese Rücksprünge 13, 13' werden Schnappverbindungen 14, 14' einer Basis 15 des Stromabnehmers aufgeklipst. Wie in Figur 2 und 3 erkennbar, sind vorliegend sechs Paare von Rücksprüngen 13, 13' vorgesehen, um die sechs Stromabnehmer aus Figur 1 befestigen zu können.

An der Basis 15 ist eine um eine senkrecht auf der Tragplatte 11 stehende Drehachse drehbare gabelförmige Lagerung 16 vorgesehen, an welcher um eine erste Drehachse 17 drehbar ein Kipparm 18 angeordnet ist. Der Kipparm 18 wird über eine in Figuren 2 bis 5 im vorgespannten Zustand gezeigten Spiralfeder 19 von der Basis 15 weggedrückt und somit in Richtung des Leiterstrangs 6 gedrückt. Dabei ist die Spiralfeder 19 an einem verlängerten Ansatz der Lagerung 16 angeordnet und somit mit der Lagerung 16 um die senkrecht auf der Tragplatte 11 stehende Drehachse drehbar. Anstelle einer Spiralfeder können auch andere geeignete Elemente verwendet werden, die den Kipparm 18 von der Basis 15 weg und zum Leiterstrang 6 drücken.

Um zu verhindern, dass der Kipparm 18 zu weit in Richtung Leiterstrang 6 bewegt wird, ist am kürzeren, in Figuren 2 bis 5 linken Ende ein Zentrierdorn 20 vorgesehen, welcher gegen einen an der Basis 15 angeordneten Zentrieranschlag 21 anschlägt. Dieser kommt insbesondere dann zur Wirkung, wenn das Transportgehänge 11 mit dem Stromabnehmer 10 von der Schleifleitung 2 abgenommen und dann wieder neu eingesetzt wird. Bevorzugt kann hierfür der Zentrierdorn 20 keil- oder kegelförmig ausgebildet sein und in den entsprechend innenkeil- oder innenkegelförmig ausgebildeten Anschlag 21 eingreifen. Hierdurch kann der Kipparm 18 vorteilhaft in eine parallel zu seiner Fahrrichtung F und zur Längsrichtung L der Schleifleitung 2 verlaufende Stellung gebracht werden, um den Stromabnehmer 10 sauber in den Leiterstrang 6 einführen zu können.

Am längeren, in Figuren 2 bis 5 rechten Ende ist in eine hohlzylindrische Öffnung 22 des Kipparms 18 ein ebenfalls hohlzylindrisches Anschlussstück 23 eines Lagerblocks 24 eingesteckt. Das Anschlussstück 23 wird über eine weitere Spiralfeder 25 zum Leiterstrang 6 hingedrückt und ist mittels einer Rastverbindung 26 gegen das Herausfallen aus der Öffnung 22 gesichert. Hierdurch kann der Lagerblock 22 in Richtung des Leiterstrangs 6 etwas nachgeben, wodurch Unebenheiten im Leiterstrang 6 ausgeglichen werden können.

Am Lagerblock 23 ist um eine zweite Drehachse 27 drehbar eine von der Seite aus gesehen im Wesentlichen U-förmige Wippe 29 mit einem Verbindungsschenkel 30 angeordnet, an dessen Enden Tragschenkel 31, 31' mit jeweils einem Schleifstückhalter 32, 32' angeordnet sind. Die Schleifstückhalter 32, 32' tragen jeweils ein Schleifstück 33, 33', welche zur schleifenden Kontaktierung des Leiterstrangs 6 vorgesehen sind. Zumindest im Bereich zwischen den Tragschenkeln 31, 31' und dem Lagerblock 22 weist die Wippe 29 längliche Ausnehmungen oder Mulden auf.

Sowohl die Basis 15 als auch der Kipparm 18, der Lagerblock 23 mit dem hohlzylindrischen Anschlussstück 24 und die Wippe 29 sind dabei aus Kunststoff, insbesondere einem harten Kunststoff wie z.B. Hartplastik hergestellt.

Um die Schleifstücke 33, 33' in den U-förmigen Leiterstrang 6 einführen und längs diesem in Fahrrichtung F verfahren zu können, sind die Wippe 29 und der Kipparm 18 dabei im wesentlichen in einer durch den Leiterstrang 6 verlaufenden Fahrebene bewegbar, abgesehen von an sich nicht erwünschten Seitenbewegungen, welche durch eine nicht exakten Verlauf des Leiterstrangs, der Schleifleitung und der Fahrbewegung des Verbrauchers verursacht sein können. Die Fahrebene steht dabei im wesentlichen senkrecht auf einer Ebene durch die mehreren Leitestränge.

Um den vom Leiterstrang 6 abgegriffenen elektrischen Strom zu den elektrischen Verbrauchern auf dem Transportgehänge 7 zu leiten, sind die beiden Schleifstücke 33, 33' über ein Verbindungskabel 34 elektrisch leitend miteinander verbunden. Weiter ist am in Figuren 2 bis 5 rechten Schleifstückhalter 31 eine Steckerbuchse 35 für einen Stecker 36 vorgesehen. Der Stecker 36 ist an einem Ende eines Anschlusskabels 37 befestigt. Das Anschlusskabel 37 ist an seinem anderen, abisolierten Ende fest mit einer Anschlussklemme 38 verbunden. Die Anschlussklemme 38 ist dabei über eine als Schwalbenschwanzähnlich ausgebildete Steckverbindung 38 mit der Basis 15 verbunden. Über einen weiteren Anschluss 40 der Anschlussklemme 38 kann dann eine Verbindungsleitung zu einem oder mehreren elektrischen Verbrauchern des Transportgehänges 7 hergestellt werden.

Das Anschlusskabel 37 ist dabei auf seinem Weg von der Steckerbuchse 35 zur Anschlussklemme 38 vorteilhaft in einem Kabelführungskanal 41 definiert geführt. Durch diese definierte Führung des Kabels 37 können ansonst nachteilige Beeinflussungen der Beweglichkeit des Kipparms 18 bzw. der Wippe 29 weitgehend vermieden werden.

Der Kabelkanal 41 weist dabei zunächst einen Durchbruch 42 in der Unterseite der Wippe 29 auf, durch den das Kabel 37 von der Steckerbuchse 34 kommend zwischen die beiden Seitenwandungen der Wippe 29 eingeführt wird, um dann durch das hohlzylindrische Anschlussstück 24 des Lagerblocks 23 geführt zu werden. Von dort wird das Kabel 37 dann durch den vorderen Bereich des Kipparms 18 geführt, welcher bevorzugt auf der Unterseite offen ist. Hierdurch kann das Kabel 37 leicht montiert werden, so dass sein freies Ende durch einen benachbart des Lagers 16 angeordneten Durchbruch 43 in der oberen Wandung des Kipparms 18 und dann um zwei Klemmschenkel 44, 44' klemmend herumgeführt werden kann. Daran anschließend wird das Kabel 37 durch einen weiteren Durchbruch 45 im kürzeren Arm des Kipparms 18 nach unten und durch einen hohlzylindrischen Kabeleingang 46 in die Basis 15 eingeführt, wo es dann immer noch im Kabelkanal 40 zur Anschlussklemme 38 geführt wird.

Ein Sichtfenster 47 im längeren Teil des Kipparms 18 ermöglicht auch von der Seite aus eine Kontrolle, ob das Kabel 37 ordnungsgemäß geführt ist.

Um sicherzustellen, dass die Schleifstücke 31, 31' beide möglichst gut und gleichmäßig an dem Leiterstrang 6 anliegen, kann bevorzugt sichergestellt werden, dass sich die Wippe 29 bei Auslenkung aus ihrer in den Zeichnungen gezeigten Ruhestellung selbständig wieder in diese Ruhestellung zurückbewegt. Hierfür sind an dem waagrechten Verbindungsschenkel der Wippe 29 zwei symmetrisch ausgebildete Federarme 48, 48' vorgesehen, die in Richtung des Lagerblocks 23 zeigen. Die Federarme 48, 48' weisen an ihren freien Enden verdickte Gleitkontakte 49, 49' auf, welche auf ebenfalls symmetrisch ausgebildeten Gleitflächen 50, 50' des Lagerblocks 23 gleiten können.

Da die Federarme 48, 48' standardmäßig gegen die Gleitflächen 50, 50' vorgespannt sind, wird hierdurch beständig eine Rückstellkraft ausgeübt, welche die Wippe 29 in die in den Figuren gezeigte Ruhestellung bewegt. Dies ist in den Zeichnungen dadurch dargestellt, dass die Gleitkontakte 49, 49' vermeintlich in die Gleitflächen 50, 50' eindringen. Tatsächlich gleiten die Gleitkontakte 49, 49' jedoch auf den Gleitflächen 50, 50', ohne in diese einzudringen.

Wird die Wippe 29 aus dieser Ruhestellung ausgelenkt, so erhöht sich die Rückstellkraft desjenigen Federarms 48, 48', der mit der Wippe 29 von der Basis 15 weg und zu dem Leiterstrang 6 hin bewegt wird. Die Rückstellkraft des jeweils anderen Federarms 48, 48' hingegen verringert sich, so dass die Wippe 29 wieder in die Ruhestellung zurückbewegt wird. Wird die Wippe 29 beispielsweise auf der in Fig. 2 bis 5 rechten Seite angehoben, so erhöht sich die Rückstellkraft des rechten Federarms 48, während sich der linke Federarm 48' entspannt. Dadurch wird die Wippe 29 dann wieder in die in Fig. 2 bis 5 gezeigte Ruhestellung bewegt.

Hierzu sind die Gleitflächen 50, 50' so ausgebildet, dass beim Bewegen der Wippe 29 aus der Ruhestellung derjenige Federarm 48, 48', der aus seiner Ruhestellung von der Basis 15 weg und zu dem Leiterstrang 6 hin bewegt wird, stärker gespannt wird, während der andere Federarm 48, 48', der aus seiner Ruhestellung zu der Basis 15 hin und von dem Leiterstrang 6 weg bewegt wird, entspannt wird.

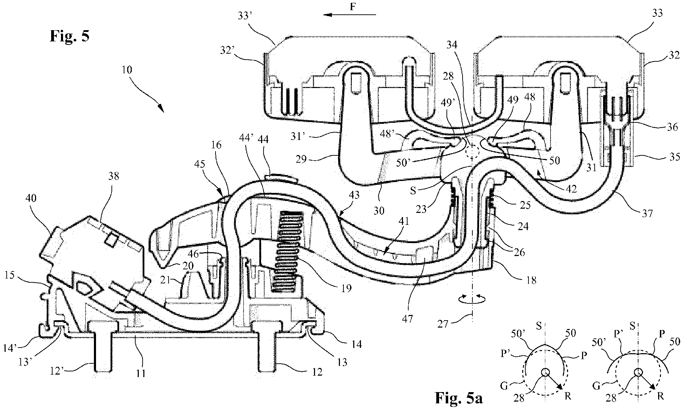

In einer vorteilhaften Ausführung können hierzu die Bereich der Gleitflächen 50, 50', die von der Ruhestellung der Gleitkontakte 49, 49' zu der Symmetrieachse S durch die dritte Drehachse 28 hin verlaufen, steiler verlaufen als ein gedachter Kreis G mit dem Radius R der Gleitkontakte 49, 49' um die Drehachse 28. Gleichermaßen können die anderen Bereich der Gleitflächen 50, 50' weniger steil verlaufen. Dieser Rückstellmechanismus ist beispielhaft in Fig. 5a links dargestellt.

Beispielsweise können die Gleitflächen 50, 50' wie im Detail von Fig. 5a als Kreisabschnitt mit dem Radius R ausgebildet sein, welcher sich mit dem gedachten Kreis G der Gleitkontakte 49, 49' in der Ruhestellung der Gleitkontakte 49, 49' an den Gleitflächen 50, 50' im Schnittpunkt P bzw. P' schneidet. Es können aber auch andere Gestaltungen der Gleitflächen vorgesehen werden, die denselben Effekt hervorrufen, beispielsweise eine durch den Schnittpunkt P tangential am gedachten Kreis G verlaufende gerade Gleitfläche.

Auch kann der Bereich der Gleitflächen 50, 50', die von der Ruhestellung der Gleitkontakte 49, 49' von der Symmetrieachse S weg verlaufen, flacher verlaufen als der gedachte Kreis G der Gleitkontakte 49, 49'. Hierdurch würde bei Auslenkung der Wippe 29 aus der Ruhestellung derjenige Federarm 48, 48', der vom Leiterstrang 6 weg und zur Basis 15 hin bewegt wird, stärker gespannt werden als in seiner Ruhestellung, so dass er die Wippe 29 wieder in die Ruhestellung zurückzieht. Dieser Rückstellmechanismus ist beispielhaft in Fig. 5a rechts dargestellt.

Werden die in Fig. 5a dargestellten beiden Varianten miteinander verknüpft, und zwar so, dass aus Fig. 5a links die oberhalb der Schnittpunkte P, P' liegenden Gleitflächen und aus Fig. 5a rechts die unterhalb der Schnittpunkte P, P' liegenden Gleitflächen verwendet werden, kann bevorzugt auch nur ein Federarm 48, 48' verwendet werden. Denn wenn der Federarm 48, 48' aus dem Schnittpunkt P, P' bewegt wird, welcher ja der ausgeglichenen Ruhestellung der Wippe 29 entspricht, dann wird stets der Federarm 48, 48' stärker gespannt als er es im Schnittpunkt P, P' ist, so dass er so eine Kraft auf die Wippe 29 ausübt, dass sie wieder in die Ruhestellung zurückbewegt wird. Grundsätzlich könnte dann auch nur ein Federarm 48 oder 48' auf einer Seite der Symmetrieachse S verwendet werden, der andere Federarm 48' wäre dann nicht mehr notwendig. Aus Gründen der Zuverlässigkeit und Auswahlsicherheit ist aber die Verwendung der beiden gegenüberliegenden Federarme 48, 48' vorteilhaft.

Grundsätzlich könnten die Federarme 48, 48' auch an dem Lagerblock 23 vorgesehen werden, so dass an der Wippe 29 entsprechend Gleitflächen vorzusehen werden, die bei einer Auslenkung der Wippe 29 aus der Ruhestellung denjenigen Federarm stärker spannen, der der Auslenkung entgegenwirkt.

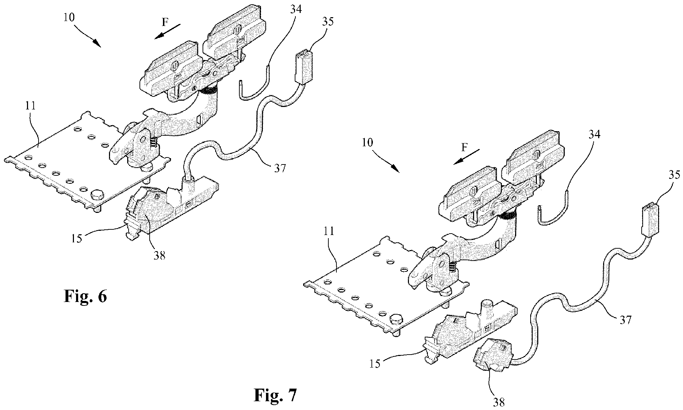

Die weiteren Fig. 6 bis 9 zeigen nochmals Explosionsdarstellungen des in Fig. 2 bis 5 im Detail dargestellten Stromabnehmers 10.

### Bezugszeichenliste

- 1: Schleifleitungssystem
- 2: Schleifleitung
- 3: Schienenstrang
- 4: Leiterstranghalterung
- 5: Isolierprofil
- 6: Leiterstrang
- 7: Transportgehänge
- 8: Antriebsräder
- 9: Seitenführungsräder
- 10: Stromabnehmer
- 11: Tragplatte
- 12, 12': Verbindungsschrauben
- 13, 13': Rücksprünge
- 14, 14': Schnappverbindungen
- 15: Basis
- 16: gabelförmige Lagerung
- 17: erste Drehachse des Kipparms gegenüber der Basis
- 18: Kipparm
- 19: Spiralfeder
- 20: Zentrierdorn
- 21: Zentrieranschlag
- 22: hohlzylindrische Öffnung
- 23: Lagerblock
- 24: hohlzylindrisches Anschlussstück
- 25: Spiralfeder
- 26: Rastverbindung
- 27: zweite Drehachse des Lagerblocks gegenüber dem Kipparm
- 28: dritte Drehachse der Wippe gegenüber dem Lagerblock
- 29: Wippe
- 30: Verbindungsschenkel
- 31, 31': Tragschenkel
- 32, 32': Schleifstückhalter
- 33, 33': Schleifstücke
- 34: Verbindungskabel
- 35: Steckerbuchse
- 36: Stecker
- 37: Anschlusskabel
- 38: Anschlussklemme
- 39: Steckverbindung (Schwalbenschwanz)
- 40: Anschluss elektrische Verbraucher
- 41: Kabelführungskanal
- 42: Durchbruch Wippe
- 43: Durchbruch Kipparm
- 44, 44': Klemmschenkel
- 45: weiterer Durchbruch Kipparm
- 46: Kabeleingang Basis
- 47: Sichtfenster
- 48, 48': Federarme
- 49, 49': Gleitkontakte
- 50, 50': Gleitflächen

- L: Längsrichtung Schleifleitung
- F: Fahrrichtung Stromabnehmer
- G: gedachter Kreis der Gleitkontakte um die dritte Drehachse
- P, P': Schnittpunkt Gleitflächen mit gedachtem Kreis der Gleitkontakte
- R: Radius Kreisabschnitt der Gleitflächen
- S: Symmetrieachse der Gleitflächen

## Patentansprüche

1. Stromabnehmer (10) für einen in eine Fahrrichtung (F) längs einer Schleifleitung (2) verfahrbaren elektrischen Verbraucher, mit mindestens zwei an einer Wippe (29) in Fahrrichtung (F) hintereinander angeordneten Schleifstücken (33, 33'), wobei die Wippe (29) um eine senkecht zur Fahrrichtung (F) verlaufende Drehachse (28) an einem Kipparm (18) gelagert ist, durch den die Wippe (29) zur Kontaktierung der Schleifstücke (33, 33') mit einem elektrisch leitenden Leiterstrang (6) der Schleifleitung (2) zum Leiterstrang (6) hin bewegbar ist, **dadurch gekennzeichnet, dass** an der Wippe (29) ein erster Federarm (48) angeordnet ist, der auf einer dem Kipparm (18) zugeordneten ersten Gleitfläche (50) gleitet, oder der erste Federarm (48) dem Kipparm (18) zugeordnet und die erste Gleitfläche (50) an der Wippe (29) angeordnet ist, wobei der erste Federarm (48) bei Auslenkung der Wippe (29) aus einer Ruhestellung gespannt wird und die Wippe (29) zur Ruhestellung hin drückt.

2. Stromabnehmer (10) nach Anspruch 1, **dadurch gekennzeichnet, dass** an der Wippe (29) ein zweiter Federarm (48') angeordnet ist, der auf einer dem Kipparm (18) zugeordneten zweiten Gleitfläche (50') gleitet, oder der zweite Federarm (48') dem Kipparm (18) zugeordnet und die zweite Gleitfläche (50') an der Wippe (29) angeordnet ist, wobei der erste Federarm (48) bei Auslenkung der Wippe (29) aus der Ruhestellung in eine Drehrichtung um die Drehachse (28) gespannt wird und die Wippe (29) entgegen der Drehrichtung zur Ruhestellung hin drückt, und der zweite Federarm (48') bei Auslenkung der Wippe (29) aus der Ruhestellung in die andere Drehrichtung gespannt wird und die Wippe (29) entgegen der anderen Drehrichtung zur Ruhestellung hin drückt.

3. Stromabnehmer (10) nach Anspruch 2, **dadurch gekennzeichnet, dass** die an der Wippe (29) angeordneten Federarme (48, 48') auf einander in Fahrrichtung (F) gegenüberliegenden Seiten der Drehachse (28) angeordnet sind und aufeinander zu gerichtet sind.

4. Stromabnehmer (10) nach einem der Ansprüche 2 bis 3, **dadurch gekennzeichnet, dass** die Federarme (48, 48') und/oder die Gleitflächen (50, 50') symmetrisch zu einer senkrecht auf der Fahrrichtung (F) stehenden und durch die Drehachse (28) verlaufenden Symmetrieachse (S) ausgebildet sind.

5. Stromabnehmer (10) nach einem der voranstehenden Ansprüche, **dadurch gekennzeichnet, dass** der oder die Federarme (48, 48') an ihrem freien Ende verdickte Gleitkontakte (49, 49') aufweisen.

6. Stromabnehmer (10) nach einem der voranstehenden Ansprüche, **dadurch gekennzeichnet, dass** die Federarme (48, 48') und/oder die Gleitflächen (50, 50') an einem Lagerblock (23) des Kipparms (18) angeordnet sind.

7. Stromabnehmer (10) nach Anspruch 6, **dadurch gekennzeichnet, dass** der Lagerblock (23) um eine senkrecht auf der Drehachse (28) der Wippe (29) und der Fahrrichtung (F) stehenden weiteren Drehachse (28) drehbar am Kipparm (18) angeordnet ist.

8. Stromabnehmer (10) nach einem der Ansprüche 6 oder 7, **dadurch gekennzeichnet, dass** der Lagerblock (23) eine hohlzylindrisches Anschlussstück (24) aufweist, welches in eine entsprechende hohlzylindrische Öffnung (22) des Kipparms (18) eingesteckt ist.

9. Stromabnehmer (10) nach einem der voranstehenden Ansprüche, **dadurch gekennzeichnet, dass** der Kipparm (18) um eine weitere senkrecht zur Fahrrichtung (F) und parallel zur Drehachse (28) der Wippe (29) verlaufenden Drehachse (17) drehbar an einer Basis (15) angeordnet ist, wobei der Kipparm (18) durch eine Feder (19) von der Basis (15) weg und zu dem Leiterstrang (6) hin gedrückt wird.

10. Stromabnehmer (10) nach Anspruch 9, **dadurch gekennzeichnet, dass** die Basis (15) mittels Schnappverbindungen (14, 14') an einer Tragplatte (11) anklippsbar ist.

11. Stromabnehmer (10) nach einem der voranstehenden Ansprüche, **dadurch gekennzeichnet, dass** der oder die Federarme (48, 48') einstückig mit der Wippe (29) bzw. dem Lagerblock (23) hergestellt sind.

12. Stromabnehmer (10) nach einem der voranstehenden Ansprüche, **dadurch gekennzeichnet, dass** der oder die Federarme (48, 48') an einem Verbindungsschenkel (30) der Wippe (29) vorgesehen sind.

13. Stromabnehmer (10) nach einem der voranstehenden Ansprüche, **dadurch gekennzeichnet, dass** zumindest die erste Gleitfläche (50) so ausgebildet ist, dass der erste Federarm (48) beim Bewegen aus der Ruhestellung stärker gespannt ist als in der Ruhestellung.

14. Stromabnehmer (10) nach Anspruch 13, **dadurch gekennzeichnet, dass** der erste Federarm (48) in der Ruhestellung die Gleitfläche (50) berührt, und ein sich daran anschließender Bereich der Gleitfläche (50) so ausgebildet ist, dass der erste Federarm (48) beim Bewegen aus der Ruhestellung in eine Richtung stärker gespannt ist als in der Ruhestellung.

15. Schleifleitungssystem (1) mit einer Schleifleitung (2) und mindestens einem an der Schleifleitung (2) in deren Längsrichtung verfahrbaren elektrischen Verbraucher, wobei die Schleifleitung (2) mindestens einen elektrisch leitenden Leiterstrang (6) zur gleitenden Kontaktierung mit mindestens zwei Schleifstücken (33, 33') eine Stromabnehmers (10) aufweist, **dadurch gekennzeichnet, dass** der Stromabnehmer (10) nach einem der Ansprüche 1 bis 14 ausgebildet ist.

## Claims

1. Current collector (10) for an electrical consuming device which is movable in a direction of travel (F) along a conductor line (2) and having at least two pantograph slippers (33, 33') arranged one behind another in direction of travel (F) on a rocker (29), wherein the rocker (29) is mounted on a rocker arm (18) about a rotational axis (28) running perpendicularly to the direction of travel (F), by means of which rocker arm (18) the rocker (29) is movable for contacting the pantograph slippers (33, 33') with an electrically conductive conductor strand (6) of the conductor line (2) towards the conductor strand (6), **characterised in that** a first spring arm (48), which slides on a first sliding surface (50) assigned to the rocker arm (18), is arranged on the rocker (29), or the first spring arm (48) is assigned to the rocker arm (18) and the first sliding surface (50) is arranged on the rocker (29), wherein the first spring arm (48) on deflection of the rocker (29) is stretched from a rest position and presses the rocker (29) towards the rest position.

2. Current collector (10) according to claim 1, **characterised in that** a second spring arm (48'), which slides on a second sliding surface (50') assigned to the rocker arm (18), is arranged on the rocker (29), or the second spring arm (48') is assigned to the rocker arm (18) and the second sliding surface (50') is arranged on the rocker (29), wherein the first spring arm (48) on deflection of the rocker (29) is stretched from the rest position in a direction of rotation about the rotational axis (28) and presses the rocker (29) towards the rest position counter to the direction of rotation, and the second spring arm (48') on deflection of the rocker (29) is stretched from the rest position in the other direction of rotation and presses the rocker (29) towards the rest position counter to the other direction of rotation.

3. Current collector (10) according to claim 2, **characterised in that** the spring arms (48, 48') arranged on the rocker (29) are arranged on sides of the rotational axis (28) opposite one another in direction of travel (F) and are directed towards one another.

4. Current collector (10) according to one of claims 2 to 3, **characterised in that** the spring arms (48, 48') and/or the sliding surfaces (50, 50') are designed to be symmetrical to an axis of symmetry (S) standing perpendicularly on the direction of travel (F) and running through the rotational axis (28).

5. Current collector (10) according to one of the preceding claims, **characterised in that** the spring arm or the spring arms (48, 48') have widened sliding contacts (49, 49') at their free end.

6. Current collector (10) according to one of the preceding claims, **characterised in that** the spring arms (48, 48') and/or the sliding surfaces (50, 50') are arranged on a bearing block (23) of the rocker arm (18).

7. Current collector (10) according to claim 6, **characterised in that** the bearing block (23) is arranged to be rotatable on the rocker arm (18) about a further rotational axis (28) standing perpendicularly on the rotational axis (28) of the rocker (29) and the direction of travel (F).

8. Current collector (10) according to one of claims 6 or 7, **characterised in that** the bearing block (23) has a hollow-cylindrical connecting piece (24) which is inserted into a corresponding hollow-cylindrical opening (22) of the rocker arm (18).

9. Current collector (10) according to one of the preceding claims, **characterised in that** the rocker arm (18) is arranged to be rotatable on a base (15) about a further rotational axis (17) running perpendicularly to the direction of travel (F) and parallel to the rotational axis (28) of the rocker (29), wherein the rocker arm (18) is pressed away from the base (15) and towards the conductor strand (6) by a spring (19).

10. Current collector (10) according to claim 9, **characterised in that** the base (15) can be clipped onto a support plate (11) by means of snap connections (14, 14').

11. Current collector (10) according to one of the preceding claims, **characterised in that** the spring arm or the spring arms (48, 48') are produced in one piece with the rocker (29) or the bearing block (23).

12. Current collector (10) according to one of the preceding claims, **characterised in that** the spring arm or the spring arms (48, 48') are provided on a connecting limb (30) of the rocker (29).

13. Current collector (10) according to one of the preceding claims, **characterised in that** at least the first sliding surface (50) is designed so that the first spring arm (48) is stretched to a greater extent during movement from the rest position than in the rest position.

14. Current collector (10) according to claim 13, **characterised in that** the first spring arm (48) in the rest position touches the sliding surface (50), and a region of the sliding surface (50) following on from that is designed so that the first spring arm (48) is stretched to a greater extent in one direction during movement from the rest position than in the rest position.

15. Conductor line system (1) with a conductor line (2) and at least one electrical consumer which is movable on the conductor line (2) in its longitudinal direction, wherein the conductor line (2) has at least one electrically conductive conductor strand (6) for sliding contact with at least two pantograph slippers (33, 33') of a current collector (10), **characterised in that** the current collector (10) is designed according to one of claims 1 to 14.

## Revendications

1. Collecteur de courant (10) pour un consommateur électrique déplaçable dans un sens de marche (F) le long d'une ligne de contact (2), avec au moins deux frotteurs (33, 33') agencés l'un derrière l'autre dans le sens de marche (F) au niveau d'une bascule (29), dans lequel la bascule (29) est logée autour d'un axe de rotation (28) s'étendant perpendiculairement au sens de marche (F), au niveau d'un bras basculant (18), par lequel la bascule (29) peut être déplacée vers le fil conducteur (6) pour la mise en contact des frotteurs (33, 33') avec un fil conducteur (6) électroconducteur de la ligne de contact (2), **caractérisé en ce qu'**un premier bras ressort (48), qui glisse sur une première surface de glissement (50) associée au bras basculant (18), est agencé au niveau de la bascule (29), ou le premier bras ressort (48) est associé au bras basculant (18) et la première surface de glissement (50) est agencée au niveau de la bascule (29), dans lequel le premier bras ressort (48) est tendu lors de la déflexion de la bascule (29) hors d'une position de repos, et pousse la bascule (29) vers la position de repos.

2. Collecteur de courant (10) selon la revendication 1, **caractérisé en ce qu'**un second bras ressort (48'), qui glisse sur une seconde surface de glissement (50') associée au bras basculant (18), est agencé au niveau de la bascule (29), ou le second bras ressort (48') est associé au bras basculant (18) et la seconde surface de glissement (50') est agencée au niveau de la bascule (29), dans lequel le premier bras ressort (48) est tendu lors de la déflexion de la bascule (29) hors de la position de repos dans un sens de rotation autour de l'axe de rotation (28), et pousse la bascule (29) dans le sens opposé au sens de rotation vers la position de repos, et le second bras ressort (48') est tendu lors de la déflexion de la bascule (29) hors de la position de repos dans l'autre sens de rotation, et pousse la bascule (29) dans le sens opposé à l'autre sens de rotation vers la position de repos.

3. Collecteur de courant (10) selon la revendication 2, **caractérisé en ce que** les bras ressort (48, 48') agencés au niveau de la bascule (29) sont agencés sur des côtés de l'axe de rotation (28) opposés l'un l'autre dans le sens de marche (F) et sont orientés l'un vers l'autre.

4. Collecteur de courant (10) selon l'une quelconque des revendications 2 à 3, **caractérisé en ce que** les bras ressort (48, 48') et/ou les surfaces de glissement (50, 50') sont réalisés symétriquement à un axe de symétrie (S) perpendiculaire au sens de marche (F) et s'étendant à travers l'axe de rotation (28).

5. Collecteur de courant (10) selon l'une quelconque des revendications précédentes, **caractérisé en ce que** le ou les bras ressort (48, 48') présentent des contacts glissants (49, 49') épaissis au niveau de leur extrémité libre.

6. Collecteur de courant (10) selon l'une quelconque des revendications précédentes, **caractérisé en ce que** les bras ressort (48, 48') et/ou les surfaces de glissement (50, 50') sont agencés au niveau d'un bloc-palier (23) du bras basculant (18).

7. Collecteur de courant (10) selon la revendication 6, **caractérisé en ce que** le bloc-palier (23) est agencé au niveau du bras basculant (18) de manière rotative autour d'un autre axe de rotation (28) perpendiculaire à l'axe de rotation (28) de la bascule (29) et au sens de marche (F).

8. Collecteur de courant (10) selon l'une quelconque des revendications 6 ou 7, **caractérisé en ce que** le bloc-palier (23) présente un raccord cylindrique creux (24), lequel est enfiché dans une ouverture cylindrique creuse (22) correspondante du bras basculant (18).

9. Collecteur de courant (10) selon l'une quelconque des revendications précédentes, **caractérisé en ce que** le bras basculant (18) est agencé au niveau d'une base (15) de manière rotative autour d'un autre axe de rotation (17) perpendiculaire au sens de marche (F) et s'étendant parallèlement à l'axe de rotation (28) de la bascule (29), dans lequel le bras basculant (18) est poussé par un ressort (19) à l'opposé de la base (15) et vers le fil conducteur (6).

10. Collecteur de courant (10) selon la revendication 9, **caractérisé en ce que** la base (15) peut être clipsée sur une plaque de support (11) au moyen de liaisons par encliquetage (14, 14').

11. Collecteur de courant (10) selon l'une quelconque des revendications précédentes, **caractérisé en ce que** le ou les bras ressort (48, 48') sont fabriqués d'un seul tenant avec la bascule (29) ou le bloc-palier (23).

12. Collecteur de courant (10) selon l'une quelconque des revendications précédentes, **caractérisé en ce que** le ou les bras ressort (48, 48') sont prévus au niveau d'une branche de liaison (30) de la bascule (29).

13. Collecteur de courant (10) selon l'une quelconque des revendications précédentes, **caractérisé en ce qu'**au moins la première surface de glissement (50) est réalisée de sorte que le premier bras ressort (48) est plus tendu lors du déplacement hors de la position de repos que dans la position de repos.

14. Collecteur de courant (10) selon la revendication 13, **caractérisé en ce que** le premier bras ressort (48) dans la position de repos touche la surface de glissement (50), et une zone de la surface de glissement (50) s'y raccordant est réalisée de sorte que le premier bras ressort (48) est plus tendu dans une direction lors du déplacement hors de la position de repos que dans la position de repos.

15. Système de ligne de contact (1) avec une ligne de contact (2) et au moins un consommateur électrique déplaçable au niveau de la ligne de contact (2) dans son sens longitudinal, dans lequel la ligne de contact (2) présente au moins un fil conducteur (6) électroconducteur pour la mise en contact en glissement avec au moins deux frotteurs (33, 33') d'un collecteur de courant (10), **caractérisé en ce que** le collecteur de courant (10) est réalisé selon l'une quelconque des revendications 1 à 14.
